# EUROPEAN PATENT SPECIFICATION

(11) **EP 4 023 874 B1**
(45) Date of publication and mention of the grant of the patent: **12.06.2024**
(21) Application number: 19942893.9
(22) Date of filing: 26.08.2019
(51) Int. Cl.: F02M 37/00, F02M 35/10, B62J 37/00, B62J 40/10, F02M 35/16, B62J 11/16, B62J 9/14, B62M 7/04, F02F 1/42

(54) **SADDLE-TYPE VEHICLE**
SATTELFAHRZEUG
VÉHICULE DE TYPE À SELLE

(43) Date of publication of application: 06.07.2022
(73) Proprietor: HONDA MOTOR CO., LTD., Minato-ku Tokyo 107-8556 (JP)
(72) Inventor: SANO, Takahiro, Tokyo 107-8556 (JP)
(74) Representative: Weickmann & Weickmann PartmbB
(86) International application number: PCT/JP2019/033308
(87) International publication number: WO 2021/038687

(56) References cited:
- EP-A1- 2 502 813
- JP-A- H0 288 376
- JP-A- 2004 182 050
- JP-A- 2005 162 209
- JP-A- 2016 223 355
- JP-A- 2018 162 760

## Description

### TECHNICAL FIELD

The present invention relates to a saddle-type vehicle in which an elastic connecting pipe is provided at a point along an intake path including an intake pipe.

### BACKGROUND ART

For example, JP 5768681 B2 discloses a configuration in which an elastic connecting pipe is provided between an upstream valve body and a downstream intake pipe connected to an intake port of an engine in an intake path connected to the intake port of the engine.

JP 2016 223 355 A shows a vehicle provided with an intake pipe having a downstream side connected to an engine, and an elastic connecting pipe provided at a point along an intake path including the intake pipe, the saddle-type vehicle comprising: a fuel tank provided behind the engine of the saddle-type vehicle; a fuel hose configured to supply fuel from the fuel tank to the injector; and a valve body that is provided upstream of an elastic connecting pipe along the intake path and houses a throttle valve and supports and injector.

In JP 2004 182 050 A, a hose stay fixed to the intake pipe supports the fuel hose. The hose stay is fixed downstream of the elastic member of the intake pipe.

### SUMMARY OF THE INVENTION

In a saddle-type vehicle in which a fuel tank is laid out below a seat and behind a storage box, it is necessary to connect the fuel tank and an injector provided in front of the engine with a fuel hose and to support the fuel hose by a support member. In this case, there is room for improvement in the arrangement of the support member for effectively suppressing the swaying of the fuel hose caused by vibrations of the engine.

Accordingly, it is an object of the present invention to provide a saddle-type vehicle capable of improving the layout efficiency of a support member of a fuel hose while effectively suppressing the swaying of the fuel hose.

The present invention provides a saddle-type vehicle according to claim 1.

By providing a support member upstream of the connecting pipe along the intake path, it is possible to support a position of the fuel hose near the injector. As a result, the size of the support member can be reduced and the layout efficiency can be improved in comparison with, for example, the case where the support member is provided on the vehicle body frame of the saddle-type vehicle.

Further, the vibration of the engine is not easily transmitted to the upstream side of the connecting pipe because of the elastic connecting pipe. Therefore, the support member is provided upstream of the connecting pipe, the fuel hose supported by the support member is less likely to be affected by vibrations of the engine. As a result, the swaying of the fuel hose can be effectively suppressed.

### BRIEF DESCRIPTION OF DRAWINGS

FIG. 1 is a left side view of a saddle-type vehicle according to the present embodiment;
FIG. 2 is a left side view of a rear portion of the saddle-type vehicle of FIG. 1, shown with a vehicle body cover removed;
FIG. 3 is a plan view around a storage box and a fuel tank with a seat removed;
FIG. 4 is a partial perspective view of an intake path;
FIG. 5 is a partial perspective view of the intake path with a valve body cover removed;
FIG. 6 is a partial cross-sectional view of the intake path;
FIG. 7 is a left side view showing the fuel hose arrangement in the vicinity of an injector.

### DESCRIPTION OF THE INVENTION

The following provides a detailed description of preferred embodiments of the saddle-type vehicle according to the present invention, while referencing the accompanying drawings.

### [1. Schematic Configuration of a Saddle-Type Vehicle 10]

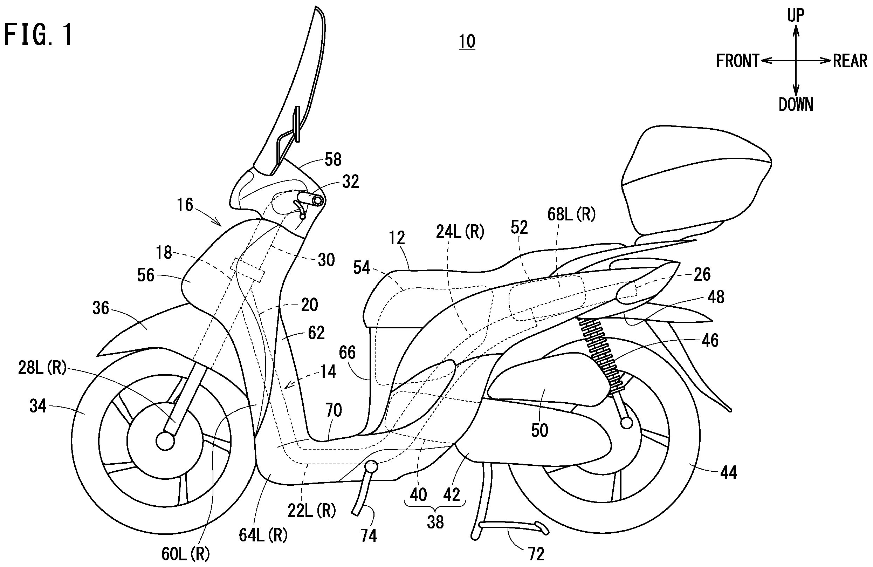

FIG. 1 is a left side view of the saddle-type vehicle 10 according to the present embodiment. In the following description, the front, back, left, right, up, and down directions will be described as seen from a rider sitting on a seat 12 of the saddle-type vehicle 10. Further, configurational elements arranged as left-right pairs in the saddle-type vehicle 10 may be described while affixing an "L" following the reference numeral for left-side configurational elements and affixing an "R" following the reference numeral for right-side configurational elements.

The saddle-type vehicle 10 according to the present embodiment is applied to a scooter type motorcycle shown in FIG. 1. The present embodiment is not limited to the motorcycle shown in FIG. 1, and can be applied to various types of saddle-type vehicles.

The saddle-type vehicle 10 according to the present embodiment includes a vehicle body frame 14 and a vehicle body cover 16 that is made of synthetic resin and covers the vehicle body frame 14.

A vehicle body frame 14 includes a head pipe 18 at a front end portion, a down pipe 20 extending diagonally backward and downward from the head pipe 18, a left-right pair of underframes 22L, 22R extending backward from the rear end of the down pipe 20, a left-right pair of rear frames 24L, 24R extending diagonally upward and backward from the rear ends of the left-right pair of underframes 22L, 22R, and a tail pipe portion 26 connecting the rear ends of the left-right pair of rear frames 24L, 24R.

A left-right pair of front forks 28L and 28R are attached to the head pipe 18 in a steerable manner. The top portions of the front forks 28L and 28R are formed as a steering stem 30. A handle 32 is attached to the steering stem 30. A front wheel 34 is attached to the bottom ends of the front forks 28L and 28R. A front fender 36, which covers the front wheel 34 from above, is attached to the front forks 28L and 28R.

A swing type of power unit 38 is supported by the left-right pair of rear frames 24L and 24R. The power unit 38 is obtained by integrally forming an engine 40 on the front side and a swing arm 42 on the rear side. A rear wheel 44 is attached to the rear end of the power unit 38. A rear cushion 46 is connected between the rear end of the power unit 38 and the left-side rear frame 24L. Furthermore, a rear fender 48, which covers the rear wheel 44 from above, is attached to the left-right pair of rear frames 24L and 24R. Yet further, an air cleaner 50 is arranged between the rear fender 48 and the power unit 38.

The left-right pair of rear frames 24L and 24R support the seat 12 on which the rider sits, from below. A fuel tank 52 is supported by the left-right pair of rear frames 24L and 24R and the rear fender 48, in the space below the seat 12 and above the rear wheel 44. Furthermore, a storage box 54 for storing the helmet and the like of the rider is supported by the left-right pair of rear frames 24L and 24R, in the space below the seat 12, in front of the fuel tank 52, and above the power unit 38.

The vehicle body cover 16 covers the vehicle body frame 14 and the like, and includes a front cover 56, a handle cover 58, a left-right pair of front side covers 60L, 60R, a leg shield 62, a left-right pair of floor side covers 64L, 64R, a seat bottom cover 66, a left-right pair of rear side covers 68L, 68R, and the like.

The front cover 56 covers the front end portion of the vehicle body frame 14 such as the head pipe 18, from the front side. The handle cover 58 covers a central portion of the handle 32 in the left-right direction, above the front cover 56. The left-right pair of front side covers 60L and 60R are connected to the left and right sides of the front cover 56, and cover the front end portion of the vehicle body frame 14 from the left and right sides. The leg shield 62 is connected to the front cover 56 and the left-right pair of front side covers 60L and 60R, and covers the head pipe 18 and the down pipe 20 from the rear. The seat bottom cover 66 covers the space below the seat 12, from the front.

A low-floor type of floor 70, for the driver sitting on the seat 12 to place their left and right feet on, is arranged in the space between the leg shield 62 and the seat bottom cover 66 and above the left-right pair of underframes 22L and 22R. The left-right pair of floor side covers 64L and 64R form a portion of the floor 70, and cover the left-right pair of underframes 22L, 22R from the left and right sides. The front end portions of the floor side covers 64L and 64R are connected to the front side covers 60L and 60R. The left-right pair of rear side covers 68L and 68R are connected to the rear end portions of the seat bottom cover 66 and floor side covers 64L and 64R, and cover the fuel tank 52 and the like from the left and right sides.

A main stand 72 is installed below the power unit 38. Furthermore, a side stand 74 is installed below the left-side floor side cover 64L.

### [2. Characteristic Configuration of the Present Embodiment]

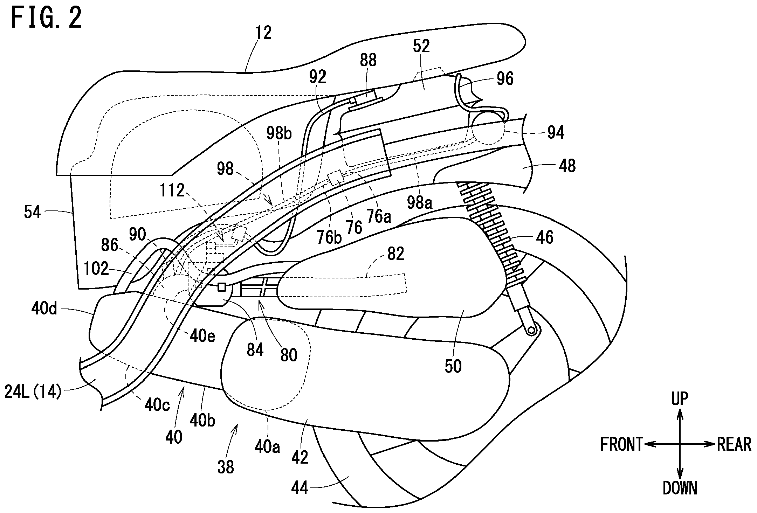

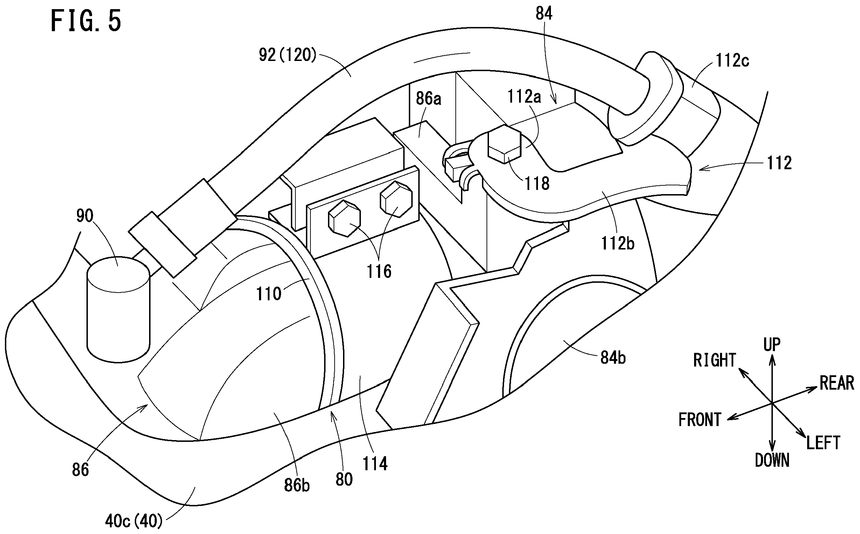

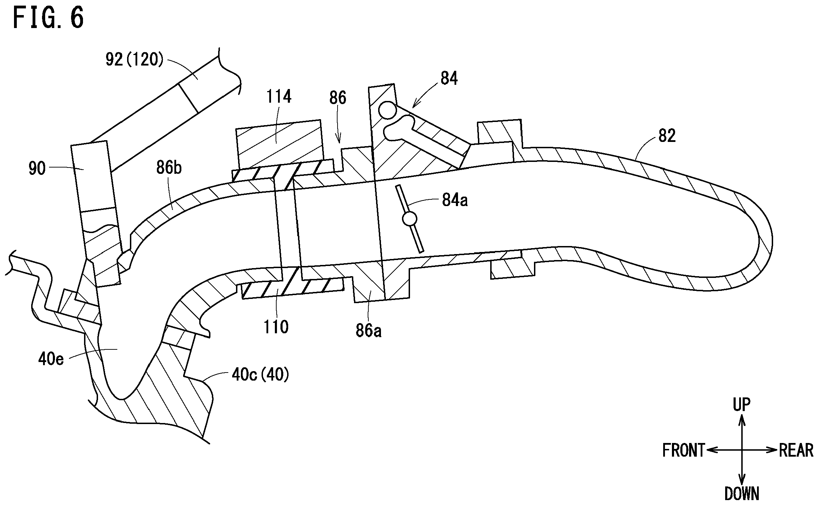

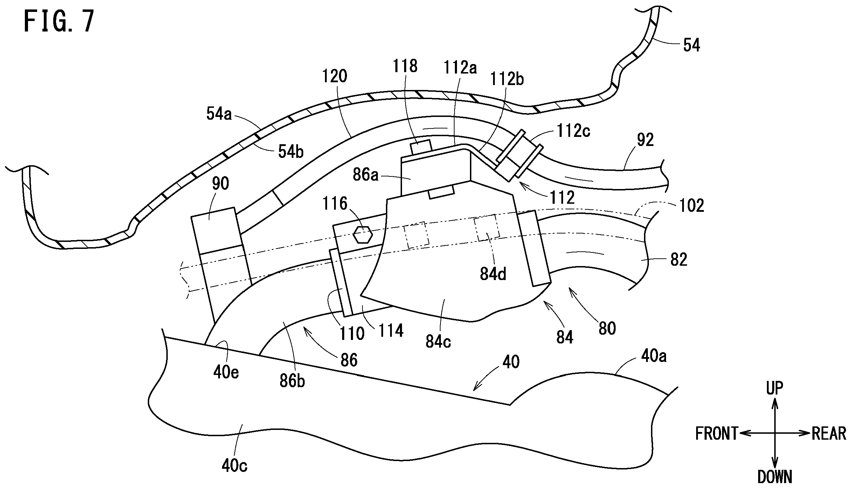

The following describes the characteristic configuration of the saddle-type vehicle 10 according to the present embodiment, while referencing FIGS. 2 to 7. In this description of the characteristic configuration, FIG. 1 will also be referenced as needed.

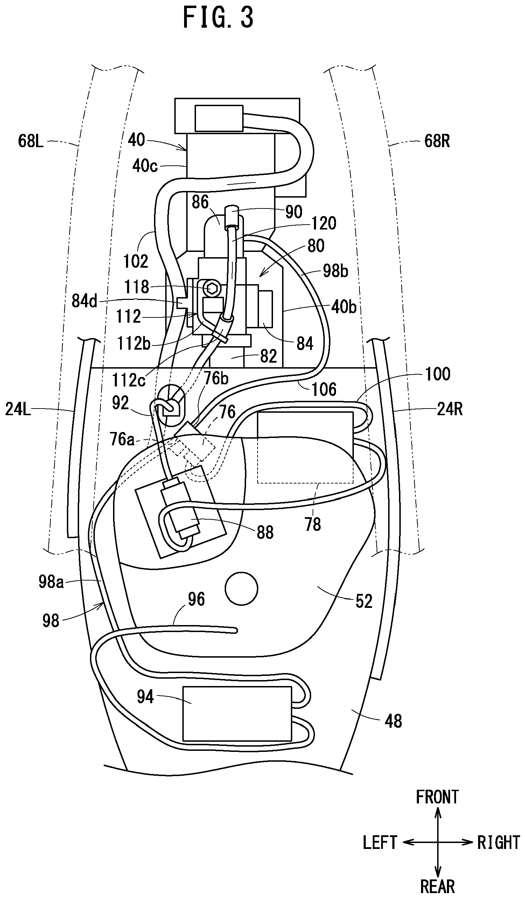

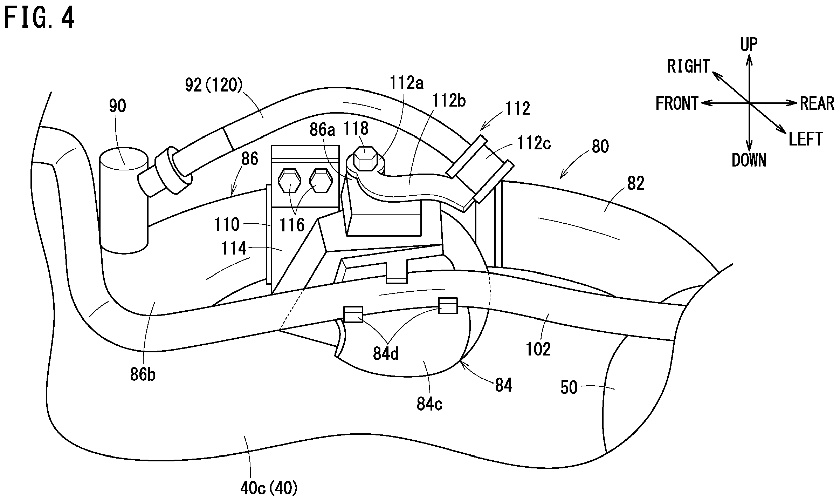

FIG. 2 is a left-side view of a rear portion of the saddle-type vehicle 10, shown with the vehicle body cover 16 removed. FIG. 3 is a planar view of a region around the storage box 54 and the fuel tank 52, showing a state where the seat 12 has been removed. FIGS. 4 to 7 illustrate the vicinity of an intake path 80 that will be described later. It should be noted that in FIGS. 2 to 7, in order to simplify the description, configurational elements that are not part of the characteristic configuration are shown in a simplified manner or omitted from the drawings.

A crank case 40a, a cylinder 40b, a cylinder head 40c, and a cylinder head cover 40d are arranged from rear to front in the stated order, in the engine 40 forming the power unit 38. The air cleaner 50 and the cylinder head 40c are connected via an intake path 80. The intake path 80 includes a connecting tube 82 that extends forward from the air cleaner 50, a valve body 84 (throttle body) that is connected to the downstream side of the connecting tube 82 and houses a throttle valve 84a and a throttle drum 84b, and an intake pipe 86 that connects the valve body 84 and an intake port 40e of the engine 40 with which the cylinder head 40c is provided. Due to this, air (intake) is supplied to the intake port 40e from the air cleaner 50 via the intake path 80.

The throttle valve 84a is housed in the valve body 84 so as to be disposed at a point along the intake path 80. The throttle drum 84b is disposed on the left side of the valve body 84. Further, a valve body cover 84c is attached to the left of the valve body 84 so as to cover the throttle drum 84b. The left side surface of the valve body cover 84c is provided with a holding portion 84d having a plurality of claw portions for holding a breather tube 102 described later.

A fuel pump 88 is provided at the front of the top surface of the fuel tank 52. On the other hand, the intake pipe 86 of the engine 40 is provided with an injector 90. The fuel pump 88 and the injector 90 are connected by a flexible fuel hose 92. Due to this, the fuel inside the fuel tank 52 is supplied from the fuel pump 88 to the injector 90 via the fuel hose 92.

A canister 94 is provided behind the fuel tank 52 on the top surface of the rear fender 48. The canister 94 is a member substantially shaped as a circular pillar, and is arranged in the right-left direction (vehicle width direction) behind the fuel tank 52. An elastic charge pipe 96 is connected between the fuel tank 52 and the canister 94. One end portion of the charge pipe 96 is connected at the rear of the top surface of the fuel tank 52, and another end portion of the charge pipe 96 is connected to the right side surface of the canister 94. Accordingly, the charge pipe 96 is routed to crawl between the fuel tank 52 and the canister 94. Due to this, the fuel gas evaporated inside the fuel tank 52 is guided and sucked into the canister 94 via the charge pipe 96.

The canister 94 and the intake pipe 86 are connected via a flexible purge pipe 98. One end portion of the purge pipe 98 is connected to the right side surface of the canister 94, and another end portion of the purge pipe 98 is connected to the intake port 40e side of the intake pipe 86. The purge control valve 76, which allows or prohibits communication between the canister 94 and intake pipe 86 via the purge pipe 98, is provided at some point along the purge pipe 98.

The purge control valve 76 is an electromagnetic valve that is controlled by the ECU 78 (electronic control unit), which controls the various types of electronic equipment of the saddle-type vehicle 10. That is, the ECU 78 and various types of electronic equipment including the purge control valve 76 are electrically connected via a harness 100. The purge control valve 76 switches between the communication state and the cutoff state to allow or prohibit the communication between the canister 94 and the intake pipe 86, based on a control signal supplied from the ECU 78 via the harness 100.

In this case, the purge pipe 98 is configured to include: an upstream pipe 98a, which connects the right side surface of the canister 94 (one end portion side of the purge pipe 98) and an inlet portion 76a on the upstream side of the purge control valve 76; and a downstream-side pipe 98b, which connects an outlet portion 76b on the downstream side of the purge control valve 76 and the intake port 40e side of the intake pipe 86 (another end portion side of the purge pipe 98). Accordingly, when the inlet portion 76a and outlet portion 76b of the purge control valve 76 are in the communication state, the fuel gas sucked in by the canister 94 is supplied to the intake pipe 86 from the upstream pipe 98a, via the inlet portion 76a and outlet portion 76b of the purge control valve 76 and the downstream-side pipe 98b.

A breather tube 102 is connected between the cylinder head 40c and the air cleaner 50. Accordingly, the blowby gas inside the engine 40 is not released into the atmosphere, and is instead supplied to the air cleaner 50 via the breather tube 102 and is supplied as new intake to the engine 40 via the intake path 80. Furthermore, by supplying the blowby gas to the air cleaner 50, it is possible to lower the pressure inside the engine 40.

Here, the characteristic configuration of the saddle-type vehicle 10 according to the present embodiment relates to a support structure of the fuel hose 92 inside the saddle-type vehicle 10.

Specifically, an elastic connecting pipe 110 is provided at a point along the intake path 80, and a support member 112 for supporting the fuel hose 92 is provided upstream of the connecting pipe 110 along the intake path 80. In this case, the intake pipe 86 includes an upstream-side intake pipe 86a connecting the connecting pipe 110 and the valve body 84, and a downstream intake pipe 86b connecting the connecting pipe 110 and the intake port 40e. That is, the intake path 80 includes the connecting tube 82, the valve body 84, the upstream-side intake pipe 86a, the connecting pipe 110, and the downstream intake pipe 86b arranged in this order from the air cleaner 50 on the upstream side to the intake port 40e on the downstream side. The upstream-side intake pipe 86a is provided with the support member 112.

The connecting pipe 110 has an I-shaped cross section, is an elastic member such as rubber, and connects the downstream side of the upstream-side intake pipe 86a and the upstream side of the downstream intake pipe 86b. A fastening band 114 is wound around the outer peripheral portion of the connecting tube 110. Both ends of the fastening band 114 are tightened with a fastening member 116 such as a screw member, whereby the downstream side of the upstream-side intake pipe 86a and the upstream side of the downstream-side intake pipe 86b can be hermetically connected by the connection pipe 110.

The support member 112 has a fixing portion 112a that is fixed to an upper part of the upstream-side intake pipe 86a from above by a fastening member 118 such as a screw member, an extending section 112b that extends backward along an upper surface of the valve body cover 84c from the fixing portion 112a, and a holding portion 112c that is provided at the tip of the extending section 112b and holds the fuel hose 92. In this case, as shown in FIG. 3, the fuel pump 88 and the support member 112 are disposed on the left side (one side) in the vehicle width direction of the saddle-type vehicle 10.

The storage box 54 is provided above the intake path 80, and a bottom portion 54a of the storage box 54 has a recess 54b recessed upward. In this case, the support member 112 supports the fuel hose 92 so that a curved portion 120 is formed between a supported portion of the fuel hose 92 supported by the holding portion 112c and the injector 90. As a result, below the storage box 54, at least a part of the curved portion 120 enters the recess 54b.

### [3. Effects of the Present Embodiment]

As described above, the saddle-type vehicle 10 according to the present embodiment includes an intake pipe 86, the downstream side of which is connected to the engine 40, and an elastic connecting pipe 110 provided at a point somewhere along an intake path 80 including the intake pipe 86. In this case, the saddle-type vehicle 10 is further provided with the fuel tank 52 disposed in a rear portion of the saddle-type vehicle 10, the injector 90 the engine 40 has, the fuel hose 92 that supplies fuel from the fuel tank 52 to the injector 90, and the support member 112 that is provided upstream of the connecting pipe 110 along the intake path 80 and supports the fuel hose 92.

In this manner, by providing the support member 112 upstream of the connecting pipe 110 along the intake path 80, it is possible to support a position of the fuel hose 92 near the injector 90. As a result, the size of the support member 112 can be reduced and the layout efficiency can be improved in comparison with, for example, the case where the support member 112 is provided on the vehicle body frame 14 of the saddle-type vehicle 10.

Further, the vibration of the engine 40 is prevented from being transmitted to the upstream side of the connecting pipe 110 by the elastic connecting pipe 110. Therefore, the support member 112 is provided upstream of the connecting pipe 110, whereby the fuel hose 92 supported by the support member 112 is less likely to be affected by the vibration of the engine 40. As a result, the swaying of the fuel hose 92 can be effectively suppressed.

Further, the saddle-type vehicle 10 includes is the valve body 84 that is provided upstream of the connecting pipe 110 along the intake path 80 and houses the throttle valve 84a. The intake pipe 86 includes the upstream-side intake pipe 86a connecting the connecting pipe 110 and the valve body 84, and a downstream intake pipe 86b connecting the connecting pipe 110 and the intake port 40e of the engine 40. In this case, the upstream-side intake pipe 86a is provided with the support member 112.

As described above, since the support member 112 is provided not for the valve body 84 but for the upstream-side intake pipe 86a, even another model of the saddle-type vehicle 10 can use the valve body 84. That is, even if the exhaust characteristics change depending on a model of the saddle-type vehicle 10, it is possible to take measures such as adopting an exhaust pipe having a high degree of freedom in design.

The saddle-type vehicle 10 further includes the fuel pump 88 that delivers fuel from the fuel tank 52 to the injector 90 via the fuel hose 92. In this case, the fuel pump 88 and the support member 112 are disposed on the left side (one side) in the vehicle width direction of the saddle-type vehicle 10. As a result, the overall length of the fuel hose 92 is shortened, whereby the overall size of the saddle-type vehicle 10 can be reduced.

Further, the storage box 54 is provided above the intake path 80. In this case, the bottom portion 54a of the storage box 54 is formed with the recess 54b, which is concave upward. The support member 112 supports the fuel hose 92 so that the curved portion 120 is formed between the injector 90 and the support portion (a portion supported by the holding portion 112c) of the fuel hose 92 supported by the support member 112. At least a portion of the curved portion 120 enters the recess 54b below the storage box 54. Thus, it is possible to route the fuel hose 92 to the injector 90 while avoiding the valve body 84 without affecting the capacity of the storage box 54 and while making room for the swaying width of the fuel hose 92.

Further, the support member 112 is fastened upstream of the connecting pipe 110 along the intake path 80 from above by the fastening member 118. Thus, even when the vehicle body frames 14 are provided on the left and right sides in the vehicle width direction, the support member 112 can be easily attached.

## Claims

1. A saddle-type vehicle (10) provided with an intake pipe (86) having a downstream side connected to an engine (40), and an elastic connecting pipe (110) provided at a point along an intake path (80) including the intake pipe (86), the saddle-type vehicle (10) comprising:
a fuel tank (52) provided behind the engine (40) of the saddle-type vehicle (10);
an injector (90) provided downstream of the connecting pipe (110) along the intake path (80) in a vicinity of the engine (40);
a fuel hose (92) configured to supply fuel from the fuel tank (52) to the injector
(90); a valve body (84) that is provided upstream of the connecting pipe (110) along the intake path (80) and houses a throttle valve (84a); wherein the intake pipe (86) includes an upstream-side intake pipe (86a) connecting the connecting pipe (110) and the valve body (84); and
a support member (112) one end portion of which is fixed between the connecting pipe (110) and the valve body (84) along the intake path (80), and another end portion of which extends above the valve body (84) and supports the fuel hose (92), wherein the support member (112) is provided on the upstream-side intake pipe (86a).

2. The saddle-type vehicle (10) according to claim 1,
wherein the intake pipe (86) includes a downstream-side intake pipe (86b) that connects the connecting pipe (110) and an intake port (40e) of the engine (40) and is provided with the injector (90), and
one end portion of the support member (112) is fixed to the upstream-side intake pipe (86a).

3. The saddle-type vehicle (10) according to claim 1 or 2, further comprising
a fuel pump (88) that delivers the fuel from the fuel tank (52) to the injector (90) via the fuel hose (92),
wherein the fuel pump (88) and the support member (112) are arranged on one side in a vehicle width direction of the saddle-type vehicle (10).

4. The saddle-type vehicle (10) according to any one of claims 1 to 3, wherein:
a storage box (54) is provided above the intake path (80);
a recess (54b) recessed upward is formed in a bottom portion (54a) of the storage box (54);
the support member (112) supports the fuel hose (92) in a manner that a curved portion (120) is formed between a support portion of the support member (112) in the fuel hose (92) and the injector (90); and
at least a part of the curved portion (120) enters the recess (54b) below the storage box (54).

5. The saddle-type vehicle (10) according to any one of claims 1 to 4, wherein:
one end portion of the support member (112) is fastened between the valve body (84) and the connecting pipe (110) along the intake path (80) from above by a fastening member (118).

## Patentansprüche

1. (geändert) Fahrzeug (10) vom Satteltyp, welches mit einem Einlassrohr (86), welches eine stromabwärtige Seite aufweist, welche mit einem Motor (40) verbunden ist, und einem elastischen Verbindungsrohr (110) bereitgestellt ist, welches an einer Stelle entlang eines Einlasspfades (80) bereitgestellt ist, welcher das Einlassrohr (86) umfasst, wobei das Fahrzeug (10) vom Satteltyp umfasst:
einen Kraftstofftank (52), welcher hinter dem Motor (40) des Fahrzeugs vom Satteltyp (10) bereitgestellt ist;
einen Injektor (90), welcher stromabwärts des Verbindungsrohres (110) entlang des Einlasspfades (80) in einer Nähe des Motors (40) bereitgestellt ist;
einen Kraftstoffschlauch (92), welcher dazu eingerichtet ist, Kraftstoff von dem Kraftstofftank (52) zu dem Injektor (90) zuzuführen;
einen Ventilkörper (84), welcher stromaufwärts des Verbindungsrohres (110) entlang des Einlasspfades (80) bereitgestellt ist und ein Drosselventil (84a) aufnimmt; wobei das Einlassrohr (86) ein stromaufwärtsseitiges Einlassrohr (86a) umfasst, welches das Verbindungsrohr (110) und den Ventilkörper (84) verbindet; und
ein Halterungselement (112), von welchem ein Endabschnitt zwischen dem Verbindungsrohr (110) und dem Ventilkörper (84) entlang des Einlasspfades (80) fixiert ist und von welchem sich ein anderer Endabschnitt oberhalb des Ventilkörpers (84) erstreckt und den Kraftstoffschlauch (92) haltert, wobei das Halterungselement (112) an dem stromaufwärtsseitigen Einlassrohr (86a) bereitgestellt ist.

2. (geändert) Fahrzeug (10) vom Satteltyp nach Anspruch 1,
wobei das Einlassrohr (86) ein stromabwärtsseitiges Einlassrohr (86b) umfasst, welches das Verbindungsrohr (110) und eine Einlassöffnung (40e) des Motors (40) verbindet und mit dem Injektor (90) bereitgestellt ist, und
ein Endabschnitt des Halterungselements (112) an dem stromaufwärtsseitigen Einlassrohr (86a) fixiert ist.

3. Fahrzeug (10) vom Satteltyp nach Anspruch 1 oder 2, ferner umfassend
eine Kraftstoffpumpe (88), welche den Kraftstoff von dem Kraftstofftank (52) über den Kraftstoffschlauch (92) zu dem Injektor (90) liefert,
wobei die Kraftstoffpumpe (88) und das Halterungselement (112) an einer Seite in einer Fahrzeugbreitenrichtung des Fahrzeugs (10) vom Satteltyp angeordnet sind.

4. Fahrzeug (10) vom Satteltyp nach einem der Ansprüche 1 bis 3, wobei:
eine Aufbewahrungsbox (54) oberhalb des Einlasspfades (80) bereitgestellt ist;
eine Aussparung (54b), welche nach oben ausgespart ist, in einem Bodenabschnitt (54a) der Aufbewahrungsbox (54) bereitgestellt ist;
das Halterungselement (112) den Kraftstoffschlauch (92) in einer Weise haltert, dass ein gekrümmter Abschnitt (120) zwischen einem Halterungsabschnitt des Halterungselements (112) in dem Kraftstoffschlauch (92) und dem Injektor (90) gebildet ist; und
wenigstens ein Teil des gekrümmten Abschnitts (120) in die Aussparung (54b) unterhalb der Aufbewahrungsbox (54) eintritt.

5. Fahrzeug (10) vom Satteltyp nach einem der Ansprüche 1 bis 4, wobei:
ein Endabschnitt des Halterungselements (112) zwischen dem Ventilkörper (84) und dem Verbindungsrohr (110) entlang des Einlasspfades (80) von oben durch ein Befestigungselement (118) befestigt ist.

## Revendications

1. Véhicule de type à selle (10) doté d'un tuyau d'admission (86) comportant un côté aval relié à un moteur (40), et un tuyau de liaison élastique (110) prévu à un point le long d'une voie d'admission (80) comportant le tuyau d'admission (86), le véhicule de type à selle (10) comprenant :
un réservoir de carburant (52) prévu derrière le moteur (40) du véhicule de type à selle (10) ;
un injecteur (90) prévu en aval du tuyau de liaison (110) le long de la voie d'admission (80) à proximité du moteur (40) ;
un flexible de carburant (92) configuré pour fournir du carburant du réservoir de carburant (52) à l'injecteur (90) ;
un corps de soupape (84) qui est prévu en amont du tuyau de liaison (110) le long de la voie d'admission (80) et qui loge un papillon des gaz (84a) ; dans lequel le tuyau d'admission (86) comporte un tuyau d'admission côté amont (86a) reliant le tuyau de liaison (110) et le corps de soupape (84) ; et
un élément de support (112) dont une partie d'extrémité est fixée entre le tuyau de liaison (110) et le corps de soupape (84) le long de la voie d'admission (80), et dont une autre partie d'extrémité s'étend au-dessus du corps de soupape (84) et supporte le flexible de carburant (92), dans lequel l'élément de support (112) est prévu sur le tuyau d'admission côté amont (86a).

2. Véhicule de type à selle (10) selon la revendication 1,
dans lequel le tuyau d'admission (86) comporte un tuyau d'admission côté aval (86b) qui relie le tuyau de liaison (110) et un orifice d'admission (40e) du moteur (40) et est doté de l'injecteur (90), et
une partie d'extrémité de l'élément de support (112) est fixée au tuyau d'admission côté amont (86a).

3. Véhicule de type à selle (10) selon la revendication 1 ou 2, comprenant en outre
une pompe à carburant (88) qui distribue le carburant du réservoir de carburant (52) à l'injecteur (90) via le flexible de carburant (92),
dans lequel la pompe à carburant (88) et l'élément de support (112) sont agencés sur un côté dans une direction de largeur de véhicule du véhicule de type à selle (10).

4. Véhicule de type à selle (10) selon l'une quelconque des revendications 1 à 3, dans lequel :
une boîte de rangement (54) est prévue au-dessus de la voie d'admission
(80) ; un évidement (54b) évidé vers le haut est formé dans une partie basse (54a) de la boîte de rangement (54) ;
l'élément de support (112) supporte le flexible de carburant (92) de telle manière qu'une partie incurvée (120) soit formée entre une partie de support de l'élément de support (112) dans le flexible de carburant (92) et l'injecteur (90) ; et
au moins une partie de la partie incurvée (120) entre dans l'évidement (54b) au-dessous de la boîte de rangement (54).

5. Véhicule de type à selle (10) selon l'une quelconque des revendications 1 à 4, dans lequel :
une partie d'extrémité de l'élément de support (112) est raccordée entre le corps de soupape (84) et le tuyau de liaison (110) le long de la voie d'admission (80) par le haut par un élément de raccordement (118).
